(19) Europäisches Patentamt
European Patent Office
Office européen des brevets

(11) Publication number: **0 269 027 B1**

(12) **EUROPEAN PATENT SPECIFICATION**

(45) Date of publication of patent specification: **19.01.94**

(51) Int. Cl.[5]: **C08L 25/00**, C08L 25/04, C08L 67/02

(21) Application number: **87117170.8**

(22) Date of filing: **20.11.87**

(54) **Blends based on vinyl aromatic polymers having high molding fluidity and thermoresistance.**

(30) Priority: **21.11.86 IT 2242186**

(43) Date of publication of application:
**01.06.88 Bulletin 88/22**

(45) Publication of the grant of the patent:
**19.01.94 Bulletin 94/03**

(84) Designated Contracting States:
**BE CH DE ES FR GB LI NL SE**

(56) References cited:
**FR-A- 2 128 461**
**FR-A- 2 376 183**
**US-A- 2 555 062**

**CHEMICAL ABSTRACTS, vol. 8, no. 6, 11th February 1974, page 40, abstract no. 27973h, Columbus, Ohio, US; & JP-A-73 08 329 (TOYOBO CO., LTD) 02-02-1973**

(73) Proprietor: **ECP ENICHEM POLIMERI S.r.l.**
**16, Piazza della Repubblica**
**I-20124 Milano(IT)**

(72) Inventor: **Biglione, Gianfranco, Dr.**
**63, viale Risorgimento**
**I-46100 Mantova(IT)**
Inventor: **Fasulo, Gian Claudio, Dr.**
**11, via Puccini**
**S. Silvestro di Curtatone**
**I-46010 Mantova(IT)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

EP 0 269 027 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to blends based on vinyl-aromatic thermoplastic polymers having high molding fluidity and high thermoresistance.

More particularly, the present invention relates to blends based on styrenic thermoplastic polymers and copolyesters obtained from an aromatic dicarboxylic acid, an aliphatic dicarboxylic acid, and at least one glycol, suitable for producing shaped articles provided with good mechanical and thermal properties.

For their particular properties, the above blends have found application in a wide range of uses of the thermoplastic materials, and particularly of the styrenic materials, in order to obtain, according to per se known technologies, molded articles having good appearance and excellent mechanical and thermal characteristics.

As is well known, molded articles are generally obtained by injection-molding consisting in melting the thermoplastic material in a heated plasticization chamber, for example an electrically heated chamber, and then in injecting it into a mold maintained at a temperature lower than that of the deformation point of the material, wherein the settling of this later results in the desired shape.

Shaped articles having intricate shapes, and also very wide surfaces, may be obtained by these working conditions with the proviso that there are available thermoplastic polymers having a good heat fluidity and flowability and requiring quite low molding temperatures.

In fact, the low molding temperatures allow to perform both with very short working cycles, owing to the low quantity of heat to be disposed of in the subsequent cooling phase of the article in the mold, and to reduce the risk of a possible thermal degradation during the working, especially for some polymers having rather low decomposition or degradation temperatures.

A technique generally used for increasing the heat fluidity or flowability of the thermoplastic polymers is the addition of lubricants or low-melting materials suitable for increasing the flowability of the melt polymer in the filling phase of the molds.

The lubricants, however, if on the one hand, help to fluidify the thermoplastic polymer, on the other hand, present the drawback of decreasing the heat properties later, such as the thermoresistance; this constitutes a big drawback, especially, in case of technics where polymers are used for the production of articles that have to withstand high temperatures during use.

It has now been discovered, in accordance with the present invention, that the fluidity and the flowability of the thermoplastic vinyl-aromatic polymers in the melt state may be considerably improved while maintaining constant at the same time their properties of thermoresistance by blending said polymers with at least one copolyester having a melting temperature lower than the molding temperature of the thermoplastic vinyl-aromatic polymer, a melt viscosity, at 232 °C, lower than 50 Pa•S, a cristallinity of from 15 to 40%, a flow index at 190 °C of from 55 to 180 g/10 min, and being obtained from at least one aromatic dicarboxylic acid, at least one aliphatic dicarboxylic acid, and at least one glycol.

The present invention contemplates, therefore, blends having high fluidity and high flowability during molding and high thermoresistance, comprising:

(a) at least one vinyl-aromatic thermoplastic polymer, and

(b) at least one copolyester having a melting point lower than the melting temperature of the thermoplastic polymer, namely a melting point between 100 °C and 200 °C, a melt viscosity, at 232 °C, lower than 50 Pa•s, a cristallinity of from 15 to 40%, a flow index at 190 °C of from 55 to 180 g/10 min, and being obtained from at least one aromatic dicarboxylic acid, at least one aliphatic dicarboxylic acid, and at least one glycol.

The proportions between the two components (a) and (b) may be varied over a wide range, depending on the type of the individual components, on the operative conditions, and on the required properties of the end product.

More particularly, quantities between 60% and 98%, and preferably between 75% and 95% by weight of the vinyl-aromatic polymer (a), and, correspondingly, quantities between 40% and 2% and, preferably, between 25% and 5% by weight of the copolyester (b), based on the total weight of the blend, are practically preferred.

The above blends have a high fluidity and flowability in the molten state such as to ensure a complete filling of the mold, without any adverse influence on the mechanical or physical properties of the resulting product.

The above copolyester (b) has the advantage that, at the melt stage it shows a sudden lowering of the viscosity and a correspondingly strong increase in fluidity, and therefore promotes the flowability of the thermoplastic polymer in which it was dispersed during the filling of the mold. After the cooling, on the other hand, owing to its high Tg, it maintains practically unvaried the settling capacity of the melt material in the

mold and the heat resistance of the molded article thus obtained.

These copolyesters (b), moreover, have a sufficient compatibility with the vinyl-aromatic polymer to which they are added so that they do not impart negative collateral effects on the aesthetic and mechanical properties of the resulting molded articles.

Copolyesters (b), suitable for being used as lubricants in the blends of the present invention, have preferably a melt viscosity, at 232 °C, between 20 and 50 Pa.S., a second order transition temperature between 30 ° and 50 °C, and a melting point between 100 ° and 200 °C.

The above copolyesters are obtained, according to well-known polycondensation or poly-trans-esterification techniques, from an aromatic dicarboxylic acid and an aliphatic dicarboxylic acid, optionally in the form of alkyl-esters, and a glycol.

The aromatic dicarboxylic acid generally has a molecular weight less than 350. Representative examples of suitable aromatic dicarboxylic acids are terephthalic acid, isophthalic acid, phthalic acid, dibenzoic acid, etc.

Terephthalic acid is preferred and, if desired may be employed in admixture with up to 50% by moles of isophthalic acid.

The aliphatic dicarboxyic acid preferably contains from 6 to 12 carbon atoms. Representative examples are adipic acid, pimelic acid, suberic acid, azelaic acid, sebacic acid, nonandicarboxylic acid, etc.

The amount of aliphatic dicarboxylic acid in the copolyester is preferably between 5 and 35% by moles of the acid components.

The glycols used in the preparation of the copolyester (b) have the formula:

$HO - R_1 - OH$     (I )

wherein $R_1$ is a linear or branched alkylene radical containing from 2 to 20 carbon atoms or a cycloalkylene radical containing from 6 to 20 carbon atoms.

Examples of glycols having formula (I) are ethylene glycol; propylene glycol; 2,2-dimethyl-1,3-propane diol; 2,2-diethyl-1,3 propane diol; 2,2-diphenyl-1,3-propane diol; 2,2-dimethoxy-1,3-propane-diol; 1,2-, 1,3-, and 1,4-butane-diol; 2,3-butane-diol; 3,3-dimethyl-1,5-pentane-diol; 1,6-hexane-diol; 1,7-heptane-diol; cyclohexanediol; cyclohexanedimethanol, etc., as well as mixtures of these glycols.

The aliphatic glycols containing from 2 to 8 carbon atoms are particularly preferred.

The above copolyesters (b) are generally known as "Hot melts" and are produced and sold by the Dutral Society, S.p.A. under the trademark "PIBITER HM".

In the following Table I some commercial types of "PIBITER HM", with their physical properties, are reported:

TABLE I

| Properties | Method | Units | PIBITER HM A18F | A18H | A20G | C13L | C17L |
|---|---|---|---|---|---|---|---|
| Melting point (I) (16°C/min) | ASTM E 28 | °C | 180±5 | 180±5 | 200±5 | 135±5 | 175±5 |
| Crystallinity | X Rays | % | 30±5 | 30±5 | 35±5 | 20±5 | 30±5 |
| Viscosity at 232°C | MA 17204 | Pas | 25±5 | 35±5 | 25±5 | 45±5 | 45±5 |
| Viscosity Brookfield | ASTM D.3236 -73 | Poises | 250±50 | 350±50 | 250±50 | 450±50 | 450±50 |
| Flow Index | ASTM D.1238 | | | | | | |
| at 190°C | - 73 | g/10' | 120-180 | 85-180 | | 55-75 | 55-75 |
| at 230°C | | | 300-440 | 230-330 | 300-400 | 170-220 | 170-220 |

(I) Determined by the Differential Scanning Colorimeter

The term "vinyl-aromatic copolymer", whenever used in the present description and in the claims, means any thermoplastic, i.e., containing, chemically bound, at least 40% by weight, units of one or more vinyl aromatic compounds having the formula (II):

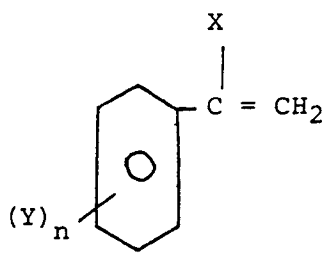

(II)

in which X is hydrogen or an alkyl radical having from 1 to 4 carbon atoms; n is zero or an integer from 1 to 5, and Y is a halogen or an alkyl radical having from 1 to 4 carbon atoms.

Examples of vinyl-aromatic compounds having the above formula (II) are styrene; methyl-styrene; mono-, di-, tri-, tetra- and penta-chloro-styrene and the corresponding alpha-methyl-styrenes, nuclear-alkylated styrenes and the corresponding alpha-methyl-styrenes such as ortho- and para-methyl-styrenes, ortho- and para-ethyl-styrenes, ortho- and para-methyl-alpha methyl-styrenes, etc.

These monomers are utilizable either alone or in admixture with each other or with other copolymerizable ethylenically unsaturated co-monomers such as for example maleic anhydride, acrylonitrile, methyl-acrylate, methyl-methacrylate, etc., in a quantity up to 60% by weight.

The term "vinyl-aromatic polymer" also includes the high impact vinyl-aromatic polymers containing no more than 50% by weight, and preferably between 5 and 35% by weight of a rubber.

The rubbers utilized for this purpose may be the natural and synthetic rubbers. Suitable synthetic rubbers are polybutadiene, polyisoprene, the butadiene and/or isoprene co-polymers with styrene or with other monomers, or the saturated rubbers having a glass transition temeprature (Tg) lower than -20 °C, such as, for example, the ethylene-propylene, the ethylene-propylene-diene terpolymers, silicone rubbers with unsaturated groups, and the like.

Preferably the vinyl-aromatic polymer may be polystyrene, or a copolymer of the styrene or of styrene-alpha-methylstyrene containing from 2 to 25% by weight of an ethylenically unsaturated nitrile, particularly acrylonitrile, or of maleic anhydride, optionally given high impact properties by the addition of up to 35% by weight of a rubber.

In the preparation of the blends of the present invention, the styrenic polymers or copolymers may be used alone or in admixture.

The blends of the present invention may also be mixed with other technopolymers as such polycarbonate (PC), polyvinyl chloride (PVC), nylon 6 or 66, polyethylene terephthalate (PET), and the like, as they are or being modified to make them self-extinguishable, dyeable, etc., and again in the form reinforced by glass fibers.

The blends of this invention may be prepared by many conventional methods, such as by extrusion in a single-screw or two-screw extruders followed by granulation or by mastication in Banbury mixers followed by working in a calender, at temperatures generally ranging from 180° to 260 °C.

The blends may also contain per se known additives such as stabilizers, plasticizers, antiflame agents, antistatic agents, dyestuffs, pigments, glass fibers, inorganic fillers, etc., which are intimately incorporated in order to impart particular desired characteristics to the material.

For a better understanding of the present invention, a few illustrative but not limitative examples are given hereinafter.

In the examples, unless otherwise specified, all parts and percentages are by weight.

The characteristics of the blends of the present invention were examined using injection test plates and the following methods:

1. Flow index (M.F.I.) were determined according to the ASTM D 1238-73 standard.
2. Softening temperature (VICAT) was determined acording to the DIN 53460 standard.
3. Heat distortion temperature (HDT) was determined according to the ASTM D 648 standard, at $0.455 \cdot 10^6$ Pa (66 psi) and $1.82 \cdot 10^6$ Pa (264 psi).
4. IZOD resilience w.n. (with notch) was determined at 23 °C, according to the ASTM D 256 standard, by using a test bar 1.27 x 0.31 cm (1/2" x 1/8").

5. Resistance to tensile stress was determined according to the ASTM D 790 standard.

Examples 1 to 7

A blend of a styrenic copolymer, consisting of 72% by weight of styrene, 8% by weight of acrylonitrile, 12% by weight of alpha-methyl-styrene, and 8% by weight of a polybutadiene rubber having a 1,4- cis content of 35%, and a PIBITER/HM copolyester of the type reported below in Table II and obtained by polycondensation of terephthalic acid, adipic acid, isophthalic acid, ethylene glycol, and butanediol, was fed, with degassing in the proportions reported in Table II, into a BANDERA® TR45 single-screw extruder having a length/diameter ratio equal to 30.

The blend was extruded at a temperature of 200°C and the granules obtained were injection-molded for obtaining test plates for carrying out the mechanical-physical tests.

Examples 1 to 3 are for comparison and relate to the above-identified styrenic copolymer as such and to the same copolymer obtained during polymerization in mineral oil in the quantities reported in Table (II).

Table II

| | | Examples | | | | | | |
|---|---|---|---|---|---|---|---|---|
| Composition | | 1 | 2 | 3 | 4 | 5 | 6 | 7 |
| Styrene copolymer | | 100 | 97.5 | 95 | 95 | 85 | 95 | 85 |
| Mineral oil | | - | 2.5 | 5 | - | - | - | - |
| PIBITER HM C17L | | - | - | - | 5 | 15 | - | - |
| PIBITER HM A18F | | - | - | - | - | - | 5 | 15 |
| Properties | Units | | | | | | | |
| MFI (220/10) | g/10' | 11 | 20 | 30 | 19 | 33 | 21 | 40 |
| VICAT 1 Kg. | °C | 105 | 99 | 93 | 103 | 104 | 103 | 103 |
| 5 KG. | °C | 96 | 91 | 85 | 95 | 94 | 94 | 94 |
| HDT 66 psi | °C | 96 | 92 | 88 | 96 | 96 | 95 | 95 |
| 264 psi | °C | 89 | 85 | 80 | 89 | 88 | 88 | 87 |
| IZOD (with notch) | J/m | 84 | 85 | 80 | 80 | 70 | 95 | 90 |
| TENSILE STRENGTH | | | | | | | | |
| yield strength | $N/mm^2$ | 31 | 25 | 20 | 30.5 | 32 | 30 | 31 |
| elongation at break | % | 41 | 39 | 35 | 31 | 51 | 35 | 53 |
| elastic modulus | $N/mm^2$ | 1900 | 1800 | 2100 | 1950 | 1950 | 1950 | 1700 |

Examples 8 to 10

Operating according to the process conditions of Examples 1 to 7, a blend consisting of:

A. a blend of:

(i) 25% by weight of a styrenic copolymer (AES) containing 24% by weight of acrylonitrile, 30% by weight of an ethylene-propylene-diene rubber, and 46% by weight of styrene;
(ii) 25% by weight of a styrenic copolymer (SAN) containing 24% by weight of acrylonitrile and 76% by weight of styrene; and
(iii) 50% by weight of a copolynmer (CR) containing 24% by weight of acrylonitrile, 8% by weight of a polybutadiene rubber, and 68% by weight of styrene;

(B) a PIBITER HM A 18F copolymer, in the quantities reported in Table III, was fed into the extruder.

The blend characteristics determined on the test plates are reported in the following Table III.

| | | Examples | | |
|---|---|---|---|---|
| | | 8 | 9 | 10 |
| AES/SAN/CR BLEND | | 100 | 95 | 85 |
| PIBITER HM A18F | | - | 5 | 15 |
| Properties | Units | | | |
| M.F.I. (220/10) | g/10' | 12 | 22 | 47 |
| VICAT 1 Kg. | °C | 99 | 97 | 95 |
| 5 Kg. | °C | 90 | 89 | 86 |
| HDT 66 psi | °C | 93 | 92 | 87 |
| 264 psi | °C | 84 | 83 | 81 |
| IZOD (with notch) | J/m | 215 | 250 | 220 |
| TENSILE STRENGTH | | | | |
| yield strength | $N/mm^2$ | 30 | 29.5 | 29 |
| elongation at break | % | 35 | 32 | 20 |
| elastic modulus | $N/mm^2$ | 2100 | 2050 | 1800 |

## Claims

**1.** Blends having high fluidity and high flowability during molding and high thermoresistance, comprising:
(a) at least one vinyl-aromatic thermoplastic polymer, and
(b) at least one copolyester having a melting point lower than the melting temperature of the thermoplastic polymer, namely a melting point between 100 °C and 200 °C, a melt viscosity, at 232 °C, lower than 50 Pa•s, a cristallinity of from 15 to 40 %, a flow index at 190 °C of from 55 to 180 g/10 min, and being obtained from at least one aromatic dicarboxylic acid, at least one aliphatic dicarboxylic acid, and at least one glycol.

**2.** Blends according to claim 1, wherein the quantity of the vinyl-aromatic polymer is between 60 and 98 % and, correspondingly the quantity of the copolymer is between 40 and 2 % by weight, with respect to the blend.

**3.** Blends according to claim 2, wherein the quantity of the vinyl-aromatic polymer is between 75 and 95 % by weight, and, correspondingly, the quantity of the copolyester is between 25 and 5 % by weight.

**4.** Blends according to one or more of claims 1, 2 or 3, wherein the copolyester has a melt viscosity, at 232 °C, between 20 and 50 Pa•s, a second order transition temperature (Tg) between 30° and 50 °C, and a melting point between 100 °C and 200 °C.

**5.** Blends according to one or more of the Claims 1-4, wherein the copolyester is obtained from at least one aromatic dicarboxylic acid having a molecular weight less than 350, at least one aliphatic dicarboxylic acid containing from 6 to 12 carbon atoms, and at least one glycol having the formula:

$HO - R_1 - OH$ (I)

wherein $R_1$ is a linear or branched alkylene radical containing from 2 to 20 carbon atoms or a cycloalkylene radical containing from 6 to 20 carbon atoms.

**6.** Blends according to one or are of the Claims 1-5, wherein the vinyl-aromatic thermoplastic polymer (a) contains at least 40% by weight of one or more units of vinyl aromatic monomers having the formula:

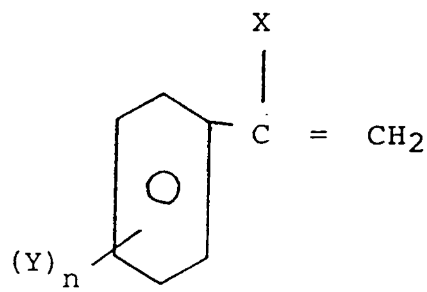

in which X is hydrogen or an alkyl radical having from 1 to 4 carbon atoms, n is zero or an integer between 1 and 5, and Y is a halogen or an alkyl radical having from 1 to 4 carbon atoms.

**7.** Blends according to Claim 6, wherein the vinyl-aromatic thermoplastic polymer (a) is a co-polymer having at least 40% of styrene units and up to 60% by weight of another ethylenically unsaturated co-monomer units copolymerizable with the styrene, e.g. being selected from the group consisting of maleic anhydride, acrylonitrile, methyl-acrylate, methyl-methacrylate, alpha-methylstyrene and mixture thereof.

**8.** Blends according to one or more of the Claims 1-7, wherein the vinyl-aromatic thermoplastic polymer is high impact and contains no more than 50% by weight, and preferably between 5 and 35% by weight, of rubber.

**9.** Blends according to one or more of the Claims 1-8, containing in addition other thermoplastic polymers such as polycarbonate, polyvinylchloride, nylon, and polyethylene terephthalate.

**10.** Blends according to one or more of the Claims 1-9,containing in addition stabilizers, plasticizers, antiflame agents, antistatic agents, dyestuffs, pigments, glass fibers, and/or inorganic fillers.

**Patentansprüche**

**1.** Mischungen, die eine hohe Fluidität und hohe Fließfähigkeit während des Formpressens und eine hohe Wärmebeständigkeit besitzen und die umfassen:
(a) mindestens ein vinylaromatisches thermoplastisches Polymer und
(b) mindestens einen Copolyester mit einem Schmelzpunkt unterhalb der Schmelztemperatur des thermoplastischen Polymers, nämlich einen Schmelzpunkt zwischen 100 °C und 200 °C, eine Schmelzviskosität bei 232 °C unter 50 Pa•s, eine Kristallinität von 15 bis 40 %, einen Fließindex bei 190 °C von 55 bis 180 g/10 Min und der erhalten wird aus mindestens einer aromatischen Dicarbonsäure, mindestens einer aliphatischen Dicarbonsäure und mindestens einem Glykol.

2. Mischungen nach Anspruch 1, worin die Menge des vinylaromatischen Polymers zwischen 60 und 98 Gew.-% und dementsprechend die Menge des Copolymers zwischen 40 - 2 Gew.%, bezogen auf die Mischung, beträgt.

3. Mischungen nach Anspruch 2, worin die Menge des vinylaromatischen Polymers zwischen 75 und 95 Gew.-% und dementsprechend die Menge des Copolymers zwischen 25 und 5 Gew.-% beträgt.

4. Mischungen nach einem oder mehreren der Ansprüche 1, 2 oder 3, worin du Copolyester eine Schmelzviskosität bei 232 °C zwischen 20 und 50 Pa•s, eine Übergangstemperatur zweiter Ordnung (Tg) zwischen 30 °C und 50 °C und einen Schmelzpunkt zwischen 100 °C und 200 °C besitzt.

5. Mischungen nach einem oder mehreren der Ansprüche 1 bis 4, worin der Copolyester erhalten wird aus mindestens einer aromatischen Dicarbonsäure mit einem Molekulargewicht unter 350, mindestens einer aliphatischen Dicarbonsäure mit 6 bis 12 Kohlenstoffatomen und mindestens einem Glykol mit der Formel:

$HO-R_1-OH$ (I)

worin $R_1$ ein linearer oder verzweigter Alkylenrest mit 2 bis 20 Kohlenstoffatomen oder ein Cycloalkylenrest mit 6 bis 20 Kohlenstoffatomen ist.

6. Mischungen nach einem oder mehreren der Ansprüche 1 bis 5, worin das vinylaromatische thermoplastische Polymer (a) mindestens 40 Gew.-% einer oder mehrerer der Einheiten vinylaromatischer Monomeren der Formel

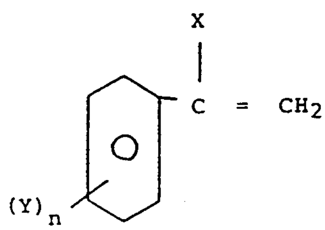

enthält, in der X Wasserstoff oder einen Alkylrest mit 1 bis 4 Kohlenstoffatomen bedeutet, n = 0 oder eine Zahl zwischen 1 und 5 ist, und Y ein Halogen oder einen Alkylrest mit 1 bis 4 Kohlenstoffatomen bedeutet.

7. Mischungen nach Anspruch 6, worin das vinylaromatische thermoplastische Polymer (a) ein Copolymer ist mit mindestens 40 Gew.-% Styroleinheiten und bis zu 60 Gew.-% mit dem Styrol copolymerisierbarer Einheiten eines anderen ethylenisch ungesättigten Comonomers, die z.B. ausgewählt sind aus der Gruppe, die aus Maleinsäureanhydrid, Acrylnitril, Methylacrylat, Methylmethacrylat, α-Methylstyrol und deren Mischungen besteht.

8. Mischungen nach einem oder mehreren der Ansprüche 1 bis 7, worin das vinylaromatische thermoplastische Polymer hochschlagfest ist und nicht mehr als 50 Gew.-% und vorzugsweise zwischen 5 und 35 Gew.-%, Kautschuk enthält.

9. Mischungen nach einem oder mehreren der Ansprüche 1 bis 8, die zusätzlich andere thermoplastische Polymere, wie Polycarbonat, Polyvinylchlorid, Nylon und Polyethylenterephthalat, enthalten.

10. Mischungen nach einem oder mehreren der Ansprüche 1 bis 9, die zusätzlich Stabilisatoren, Weichmacher, Flammhemmer, Antistatika, Farbstoffe, Pigmente, Glasfasern und/oder anorganische Füllstoffe enthalten.

## Revendications

1. Mélanges présentant une capacité d'écoulement et une fluidité élevées durant le moulage, ainsi qu'une résistance à la chaleur élevée qui comprennent:
   (a) au moins un polymère thermoplastique vinylaromatique; et
   (b) au moins un copolyester ayant un point de fusion inférieur à la température de fusion du polymère thermoplastique, c'est-à-dire un point de fusion compris entre 100 et 200 °C, une viscosité à l'état fondu à 232 °C inférieure à 50 Pa.S., un degré de cristallisation compris entre 15 et 40%, un indice d'écoulement à 190 °C compris entre 55 et 180 g/10 minutes, lequel copolyester est obtenu à partir d'au moins un acide dicarboxylique aromatique, d'au moins un acide dicarboxylique aliphatique et d'au moins un glycol.

2. Mélanges selon la revendication 1, caractérisés en ce que la quantité de polymère vinylaromatique est comprise entre 60 et 98% en poids et en ce que la quantité correspondante de copolymère est comprise entre 40 et 2% en poids par rapport au mélange.

3. Mélanges selon la revendication 2, caractérisés en ce que la quantité de polymère vinylaromatique est comprise entre 75 et 95% en poids et en ce que la quantité correspondante de copolymère est comprise entre 25 et 5% en poids.

4. Mélanges selon une ou plusieurs des revendications 1, 2 et 3, caractérisés en ce que le copolymère présente une viscosité à l'état fondu à 232 °C comprise entre 20 et 50 Psa, une température de transition de second ordre (Tg) comprise entre 30 °C et 50 °C et un point de fusion compris entre 100 °C et 200 °C.

5. Mélanges selon une ou plusieurs des revendications 1 à 4, caractérisés en ce que le copolymère est obtenu à partir d'au moins un acide dicarboxylique aromatique présentant un poids moléculaire inférieur à 350, d'au moins un acide dicarboxylique aliphatique contenant entre 6 et 12 atomes de carbone et d'au moins un glycol, représenté par la formule:

   $HO - R_1 - OH$ (I)

   dans laquelle:
   $R_1$ représente un radical alkylène linéaire ou ramifié contenant entre 2 et 20 atomes de carbone, ou un radical cycloalkylène contenant entre 6 et 20 atomes de carbone.

6. Mélanges selon une ou plusieurs des revendications 1 à 5, caractérisés en ce que le polymère vinylaromatique thermoplastique (a) contient au moins 40% en poids d'une ou plusieurs unités de monomères vinylaromatiques représentés par la formule:

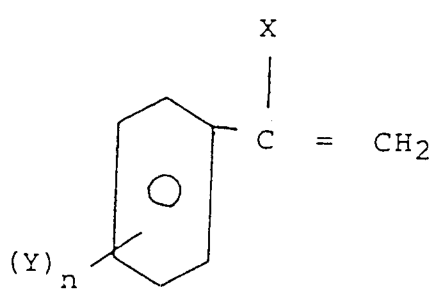

   dans laquelle:
   X représente un atome d'hydrogène ou un radical alkyle renfermant entre 1 et 4 atomes de carbone;
   n est égal à 0 ou représente un nombre entier compris entre 1 et 5; et
   Y représente un atome d'halogène ou un radical alkyle renfermant entre 1 et 4 atomes de carbone.

7. Mélanges selon la revendication 6, caractérisés en ce que le polymère thermoplastique vinylaromatique (a) correspond à un copolymère renfermant au moins 40% d'unités styrène et jusqu'à 60% d'autres unités de copolymère éthyléniquement insaturé copolymérisable avec le styrène, par exemple qui sont sélectionnes dans le groupe consistant en anhydride maléique, acrylonitrile, acrylate de méthyle, méthacrylate de méthyle, alpha-méthylstyrène et leurs mélanges.

8. Mélanges selon une ou plusieurs des revendications 1 à 7, caractérisés en ce que le polymère vinylaromatique thermoplastique présente une résistance aux chocs élevée et ne contient pas plus de 50% en poids, et de préférence entre 5 et 35% en poids, d'un caoutchouc.

9. Mélanges selon une ou plusieurs des revendications 1 à 8, contenant en outre d'autres polymères thermoplastiques tels que polycarbonate, chlorure de polyvinyle, nylon et téréphtalate de polyéthylène.

10. Mélanges selon une ou plusieurs des revendications 1 à 9, contenant en outre des agents stabilisants, plastifiants, ignifuges, antistatiques, des colorants, des pigments, des fibres de verre et/ou des adjuvants inorganiques.